Europäisches Patentamt

European Patent Office

Office européen des brevets

(19)

(11) Veröffentlichungsnummer: **0 175 906**

**A2**

(12) # EUROPÄISCHE PATENTANMELDUNG

(21) Anmeldenummer: **85110186.5**

(22) Anmeldetag: **14.08.85**

(51) Int. Cl.⁴: **G 05 B 19/23**

(30) Priorität: **17.09.84 DE 3434125**

(43) Veröffentlichungstag der Anmeldung:
**02.04.86 Patentblatt 86/14**

(84) Benannte Vertragsstaaten:
**AT BE CH DE FR GB IT LI NL SE**

(71) Anmelder: **Battelle-Institut e.V.**
**Am Römerhof 35 Postfach 900 160**
**D-6000 Frankfurt/Main 90(DE)**

(72) Erfinder: **Steininger, Helmut, Dr.**
**Schumannstrasse 12**
**D-6392 Neu-Anspach(DE)**

(72) Erfinder: **Wevelsiep, Klaus, Dr.**
**Fuchstanzstrasse 11**
**D-6239 Kriftel(DE)**

(72) Erfinder: **Selders, Matthias, Dr.**
**Liviushof**
**D-6233 Kelkheim(DE)**

(72) Erfinder: **Sdunzig, Horst-Dieter**
**Neugasse 10**
**D-6203 Hochheim(DE)**

(74) Vertreter: **Rupprecht, Klaus, Dipl.-Ing.**
**Am Römerhof 35**
**D-6000 Frankfurt (Main) 90(DE)**

(54) **Vorrichtung zur Steuerung zweidimensionaler Bewegungen.**

(57) Eine Vorrichtung zur Steuerung zweidimensionaler Bewegungen enthält eine Matrix aus mehreren, sich kreuzenden und voneinander isolierten Leiterbahnen, die in x- und y-Richtung eines, vorzugsweise rechtwinkligen Koordinatensystems verlaufen. Dabei liegen die in x-Richtung verlaufenden Leiterbahnen an einer Wechselspannung, deren Frequenz sich von der Wechselspannungsfrequenz der in y-Richtung verlaufenden Leiterbahnen unterscheidet. Weiter ist ein Signalaufnehmer mit mindestens zwei, vorzugsweise drei Elektroden versehen, der in einer der Matrix parallelen Ebene über die Matrix beweglich angebracht ist. Die Bewegung des Signalaufnehmers ist mit der zu steuernden Bewegung gekoppelt. Die aus den Elektroden während der Bewegung über die Matrix erzeugten Signale werden zur Richtungs- und Wegbestimmung der zu steuernden Bewegung ausgewertet.

FIG. 1

0175906

## Beschreibung

Die Erfindung betrifft eine Vorrichtung zur Steuerung zweidimensionaler Bewegungen.

Zahlreiche auf elektromechanischen Prinzipien oder auf der Ausnutzung piezoelektrischer oder magnetischer Effekte, d.h. Magnetostriktion beruhende zweidimensionale Positionssensoren, wie Digitalisierbretter oder Rollkugeln sind bekannt. Diese mit hohem technologischen Aufwand gefertigten Positionssensoren zeichnen sich durch eine hohe Auflösung aus. Für zahlreiche Anwendungen wie einfache Cursorsteuerungen, flächige Positionsaufnahme zweidimensionaler Bewegungen, z.B. bewegter Arm im Labor oder im Automobilbau, Bestimmung der Abweichung von einer Zwangsbewegung im Maschinenbau, werden hingegen zweidimensionale Positionssensoren gesucht, an deren Auflösung keine hohen Anforderungen gestellt werden, die aber zuverlässig und billig sein müssen.

Der Erfindung liegt die Aufgabe zurgunde einen zuverlässigen, kostengünstig herzustellenden zweidimensionalen Positionssensor zu konzipieren, der in jenen Bereichen eingesetzt werden kann, in denen Rollkugeln, Lineare- oder Beschleunigungsaufnehmer für die Erfassung zweidiensionaler Bewegungen zu aufwendige Lösungen darstellen.

Diese Aufgabe ist erfindungsgemäß dadurch gelöst, daß eine Matrix aus mehreren, sich kreuzenden und voneinander isolierten Leiterbahnen, die in x- und y-Richtung des Koordinatensystems verlaufen, vorgesehen ist, wobei die in x-Richtung verlaufenden Leiterbahnen an einer Wechselspannung liegen, deren Frequenz sich von der Wechselspannungsfrequenz der in y-Richtung verlaufenden Leiterbahnen unterscheidet, und daß ein Signalaufnehmer mit mindestens zwei, in einer der Matrix parallelen Ebene angeordneten Elektroden über die Matrix beweglich angebracht ist, wobei die Bewegung des Signalaufnehmers mit der zu steuernden Bewegung gekoppelt ist, und daß die durch die Elektroden während der Bewegung über die Matrix kapazitiv gewonnenen Signale zur Bestimmung der Richtung und des Weges der zu steuernden Bewegung auswertbar sind. Vorteilhafte Weiterbildungen der erfindungsgemäßen Vorrichtung sind in den Unteransprüchen 2 bis 9 erläutert.

Die Erfindung wird in der schematischen Zeichnung näher erläutert.
Es zeigen

Fig. 1    das Prinzip des erfindungsgemäßen, 2-dimensionalen Positions- und Richtungssensors;

Fig. 2    a) und b)
          den Verlauf der Leiterbahnen in den Kreuzungspunkten der Matrix (a) und elektrische Ersatzschaltung (b);

Fig. 3    das Prinzip der Signalverarbeitung;

Fig. 4    die Darstellung der Signalspannung einer Elektrode bei Bewegung in x-Richtung auf Leiterbahn x und y-Richtung auf Leiterbahn y;

Fig. 5    die Darstellung der Signalspannung einer Elektrode vor der Digitalisierung bei Bewegung in x-Richtung zwischen zwei x-Leiterbahnen und bei diagonaler Bewegung;

- 3 -

0175906

Fig. 6 das Prinzip der Richtungsbestimmung, dargestellt an einem Elektrodenpaar;

Fig. 7 das Prinzip der Positionsbestimmung und

Fig. 8 den Eingangsteil jeder Elektrode.

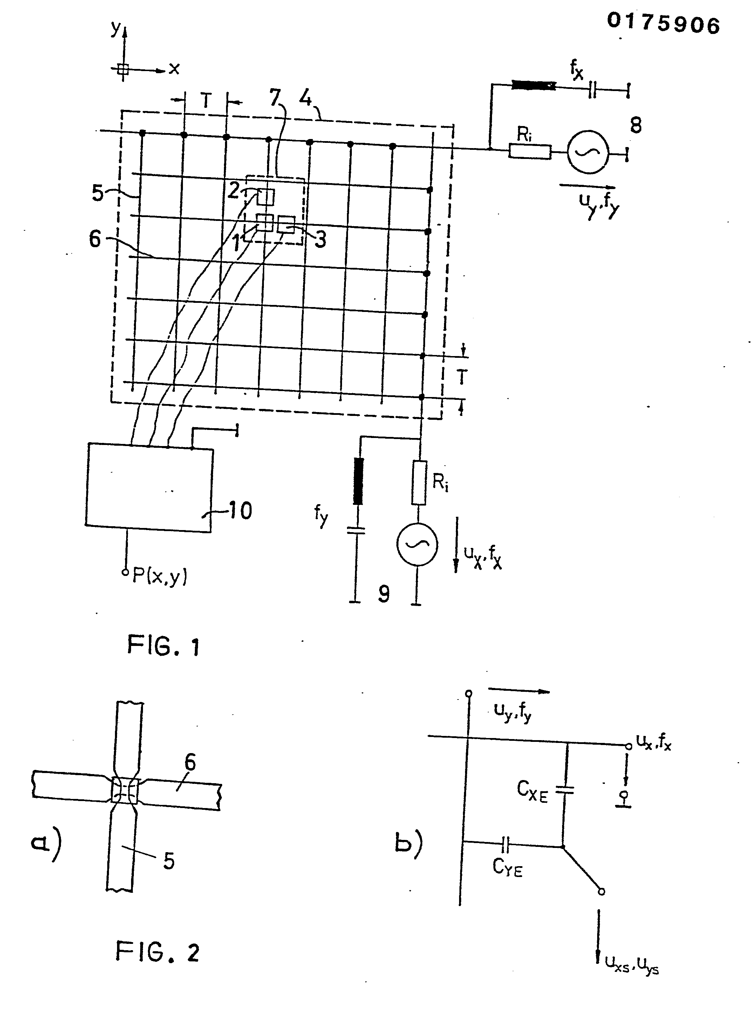

Ein Dickschichtsubstrat 4 wird gemäß Fig. 1 mit einer Matrix aus sich kreuzenden Leiterbahnen 5 und 6 versehen. Die senkrecht verlaufenden y-Bahnen 5 und die waagrecht verlaufenden x-Bahnen 6 sind voneinander isoliert. Jeweils alle x- und alle y-Bahnen sind am Rande durch Verbindungen elektrisch leitend zusammengefaßt. Ein in definiertem Abstand über der Matrix schwebender flacher Signalaufnehmer 7, vorzugsweise ebenfalls als Dickschichtsubstrat ausgeführt, mit drei Einzelelektroden 1, 2 und 3 in einer bestimmten geometrischen Zuordnung nimmt kapazitiv elektrische Signale ab, die von den Oszillatoren 8 und 9 in die entsprechenden Leiterbahnen 5 und 6 der Matrix eingekoppelt werden. Oszillator 8 legt die Wechselspannung $U_y$, mit der Frequenz $f_y$ an die in y-Richtung verlaufenden Leiterbahnen 5, Oszillator 9 bedient sinngemäß mit $U_x$, $f_x$ die x-Bahnen 6. Den Oszillatoren 8 und 9 sind jeweils Saugkreise der "anderen" Frequenz parallel geschaltet. Sie sollen die kapazitiv über die sich kreuzenden Leiterbahnen 5,6 eingekoppelten Anteile des anderen Signals möglichst vollständig kurzschließen. Ein Störabstand von mindestens 20 dB wird eingehalten: die Güte der Saugkreise, die Frequenzen $f_x$ und $f_y$ werden entsprechend gewählt.

Prinzipiell kann eine Matrix mit beliebig feiner Teilung T versehen werden. Grenzen werden durch die Auflösung der Dickschichttechnologie gegeben. Als Ausführungsbeispiel wird eine Anordnung auf einem Substrat von 10 cm x 10 cm mit einer Teilung T = 2 mm realisiert. Die erreichte Auflösung liegt damit bei 1 mm.

Die Elektrodenanordnung 7 zur Signalabnahme besteht aus einer Hauptelektrode 1 zur Positionsdetektion in bezug auf einen beliebigen Augangspunkt und zwei Satellitenelektroden 2 und 3 zur Richtungsbestimmung der Bewegung. Sie können z.B. kreisförmig oder quadratisch sein, wobei der Durchmesser oder die Kantenlänge der Elektroden zumindest gleich der Breite einer Leiterbahn und kleiner als der Mittenabstand zwischen zwei parallelen Leiterbahnen sein sollte. Im folgenden wird angenommen, daß der Signalaufnehmer 7 nicht nur parallel zur x- und y-Achse verschoben wird, die Bewegung kann in x- und y-Richtung gleichzeitig, also auch diagonal, erfolgen. Rotation des Aufnehmers 7 ist ausgeschlossen. Die Elektroden 1, 2, 3 des Signalaufnehmers 7 werden mit einer Auswertelektronik 10 verbunden.

Fig. 2 zeigt im Detail eine Leiterbahnkreuzung 5/6 und die elektrische Ersatzschaltung der Anordnung. Für die Kapazitäten $C_{xE}$ und $C_{yE}$ in Abhängigkeit von der Position der Elektrode 1 ergeben sich die folgenden Beziehungen:

| Position d. Elektrode | wirksame Kapazitäten | nicht-wirksame Kapazitäten |
|---|---|---|
| 1. über y-Bahn | $C_{yE}$ | $C_{xE}$ 0 |
| 2. über x-Bahn | $C_{xE}$ | $C_{yE}$ 0 |
| 3. über Kreuzung | $C_{xE}$ ' $C_{yE}$ | |
| 4. zwischen Bahnen | | $C_{xE}$ 0, $C_{yE}$ 0 |

0175906

Die absolute Größe der Kapazitäten $C_{xE}$, $C_{yE}$ ist solange nicht von Bedeutung, wie eine sichere Aufnahme der Signale gewährleistet und vor allem eine Entscheidung darüber gefällt werden kann, ob die Elektrode zwischen den Bahnen steht. Eine Änderung der wirksamen Kapazitäten im Bereich 1:3 in den Fällen 1) bis 3) erscheint zulässig. Nicht-wirksame Kapazitäten sollen etwa nur 1/10 der jeweils wirkenden Kapazitäten betragen.

Die Ausprägung der Leiterbahnen x und y im Bereich der Kreuzung kann etwa nach Fig. 2 vorgenommen werden: es ist wesentlich, daß ca. 50 % der Kreuzungsfläche von der "unten" liegenden Leiterbahn und sinngemäß die restlichen 50 % von der "oben" liegenden Leiterbahn gebildet werden. Bei Stellung einer Elektrode 1,2 oder 3 über der Leiterbahnkreuzung sollten die wirksamen Kapazitäten $C_{xE}$ und $C_{yE}$ möglichst gleich groß sein und nicht wesentlich kleiner sein als wenn die betreffende Elektrode über eine Leiterbahn außerhalb des Kreuzungsbereiches stehen würde.

Die Elektroden 2 und 3 zur Richtungsbestimmung sind so angeordnet, daß der Mittenabstand der Elektroden 2 und 3 von der Hauptelektrode 1 gleich der halben Teilung T oder einem ungeradzahligen Vielfachen der halben Teilung T des Abstands zwischen parallelen Leiterbahnen der Matrix ist. Aus der zeitlichen Abfolge der Signaländerungen zwischen den Elektroden 1 und 3 kann bei Bewegung längs einer x-Bahn auf die Richtung geschlossen werden. Das gleiche gilt sinngemäß für die Elektroden 1 und 2 in bezug auf die Erkennung der y-Richtung. Richtungs- und Positionsermittlung erfolgen durch Auswertung, d. h. Zählung der digitalisierten Signale $U_{xs}$, $U_{ys}$ nach deren Trennung.

Fig. 2b zeigt die elektrische Ersatzschaltung, die sich ergibt, wenn die Leiterbahnen x und y kapazitiv mit einer Elektrode in Verbindung stehen. Die wirksame Größe der Kapazitäten $C_{xE}$ und $C_{yE}$ ist abhängig von der Stellung einer Elektrode in bezug auf die betreffende Leiterbahn. Bei Stellung einer Elektrode über einer Leiterbahn ist die wirksame Kapazität am größten, bei Stellung zwischen den Leiterbahnen sind beide Kapazitäten am kleinsten. Das Ersatzschaltbild läßt sich für jede Elektrode aufstellen.

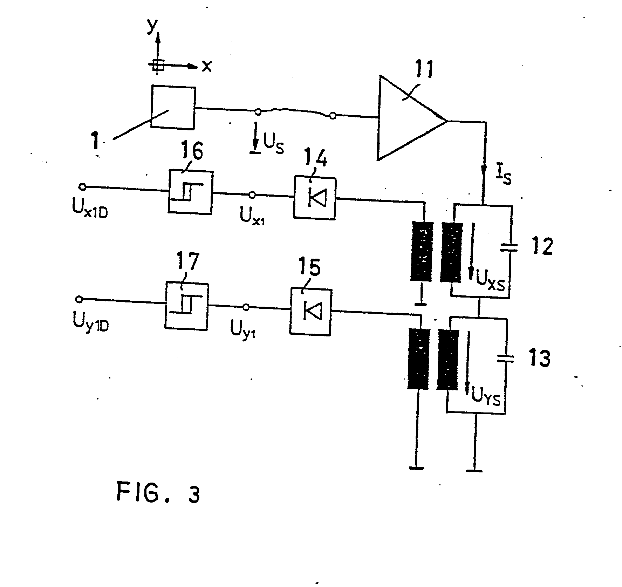

Die Signalverarbeitung wird in Fig. 3 dargestellt. Diese Aufbereitungsschaltung ist für jede Elektrode, d. h. 3-fach vorhanden und erzeugt die Spannungen $U_{x1D}$, $U_{x2D}$, $U_{x3D}$, $U_{y1D}$, $U_{y2D}$, $U_{y3D}$, von denen aber nur die Signale U , $U_{x2D}$, $U_{y1D}$ und $U_{y3D}$ verwendet werden. Danach werden die von den Elektroden 1, 2 oder 3 aufgenommenen Signale über flexible abgeschirmte Verbindungen in einen Impendanzwandler 11 geführt und über Resonanzkreise 12 ($f_x$) und 13 ($f_y$) mit nachgeschaltetem Gleichrichter 14 und 15 und Schwellen 16 und 17 in Rechtecksignale umgewandelt. Vorzugsweise wird der Impendanzwandler 11 auf der Rückseite des flachen Signalaufnehmers 7 in Dickschichttechnik angebracht und somit in den Signalaufnehmer 7 integriert. Die restlichen Teile der Schaltung werden über flexible Leitungen in die Auswertelektronik 10 verlegt. Die Resonanzkreise 12 und 13 können erfindungsgemäß durch aktive Analog- bzw. Digitalfilter ersetzt werden, um durch Wegfall der Spulen auch hier eine integrierbare Schaltungstechnik realisieren zu können.

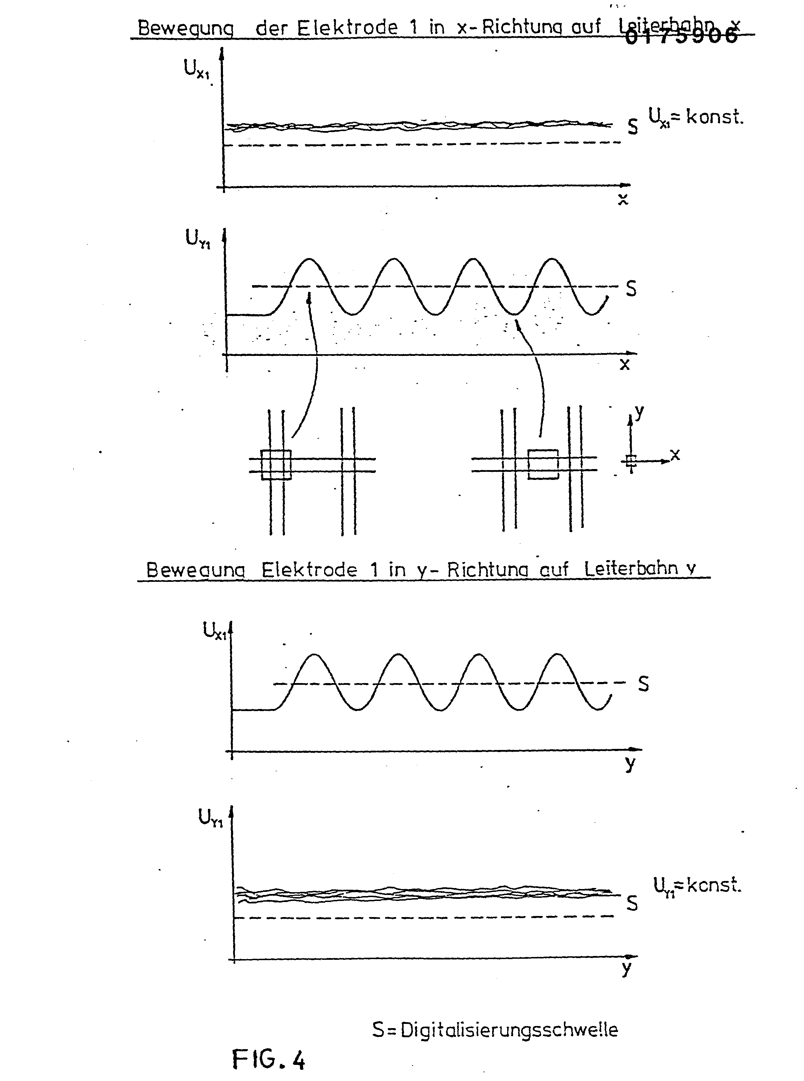

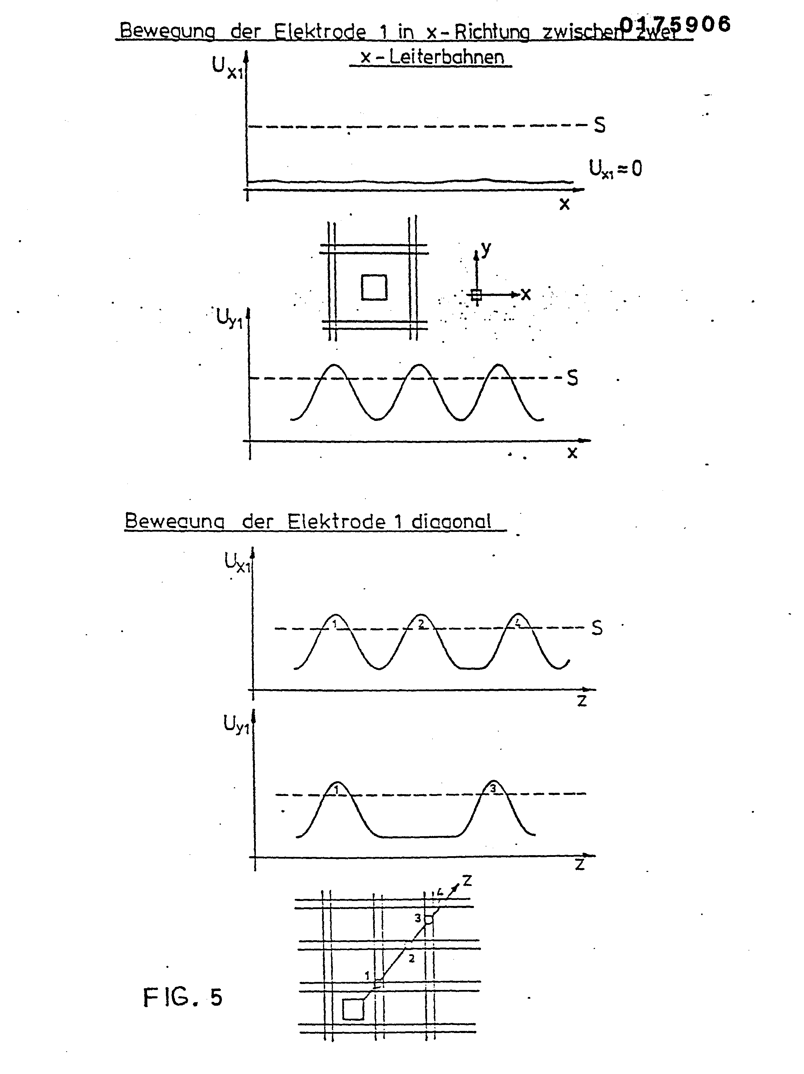

Am Ausgang der in Fig. 3 gezeigten Gleichrichter 14 und 15 werden Spannungen $U_{x1}$ und $U_{y1}$ erhalten, deren Verlauf bei verschiedenen Elektrodenbewegungen in Fig. 4 dargestellt ist. Entsprechendes gilt für die Darstellung der Elektrodenbewegungen in Fig. 5, in der die nicht digitalisierten Signalspannungen z.B. bei Bewegung der Elektrode 1 in x-Richtung zwischen zwei x-Leiterbahnen bzw. bei diagonaler Bewegung gezeigt sind.

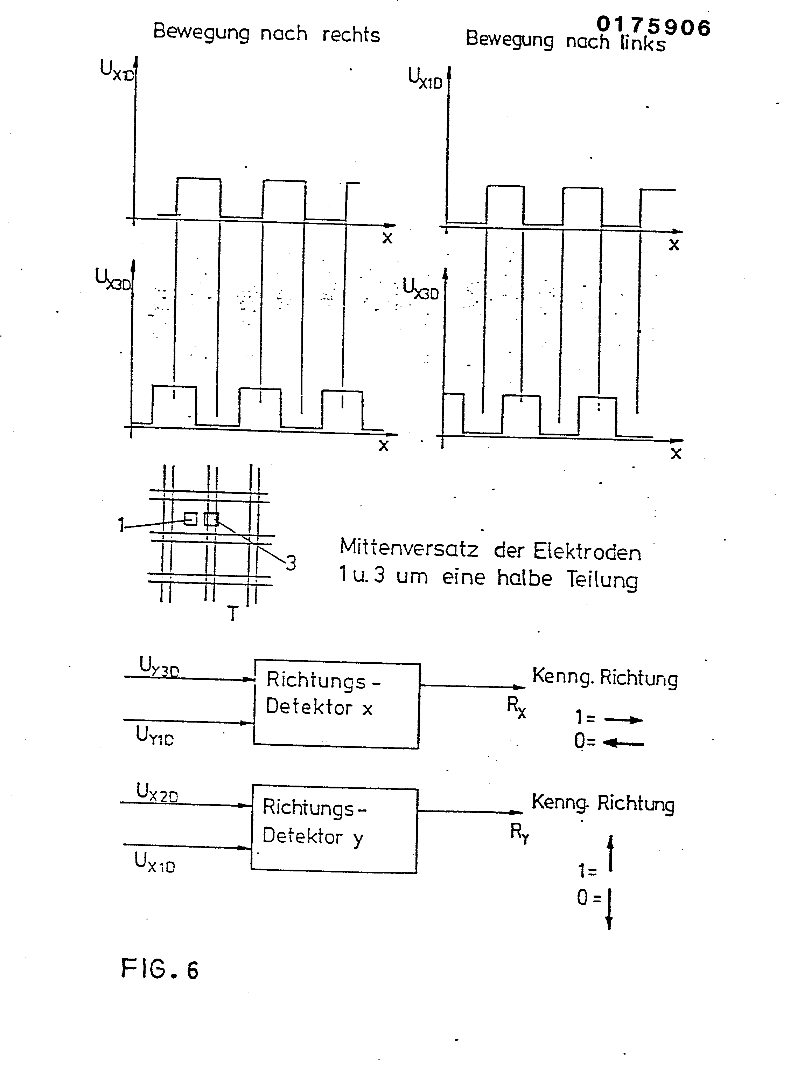

Aus Fig. 6 geht das Prinzip der Richtungserkennung hervor.

Aus der gegenseitigen Lage der ansteigenden Flanken der digitalisierten Spannungen $U_{xD}$ und $U_{yD}$ kann auf die Bewegungsrichtung geschlossen werden. Für eine Bewegung nach rechts und links erfolgt die Richtungserkennung aus den Spannungen $U_{x1D}$ und $U_{x3D}$ , die von den Elektroden 1 und 3 erzeugt werden. Sinngemäß wird eine Bewegung in y-Richtung aus den Spannungen $U_{y1D}$ und $U_{y2D}$ erkannt.

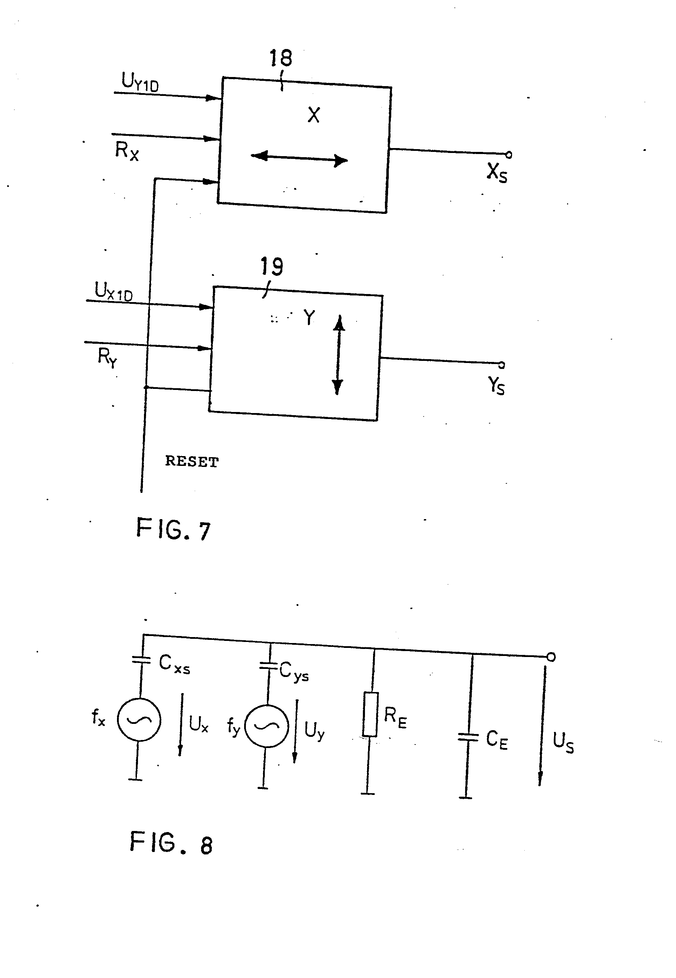

Die Positionsbestimmung wird über Zähler vorgenommen, die entsprechend der Richtungserkennung inkrementiert oder dekrementiert werden. Es ist je ein Zähler 18 und 19 für die x- und y-Richtung erforderlich. Das Prinzipschaltbild dieses Teiles der Auswertelektronik zeigt Fig. 7.
Die Ausgangssignale $X_S$ und $Y_S$ geben die Stellung des Signalaufnehmers, z.B. Mittelpunkt der Elektrode, relativ zum Ursprung des Koordinatensystems der Matrix an. Dieser kann durch entsprechende Resetstellung der Zähler 19, 20 durch einen extern erzeugten Reset Impuls beliebig innerhalb der Matrix gewählt werden: der Reset Impuls stellt die Zähler 18 und 19 unabhängig von der momentanen Stellung der Sonde auf Null.
Die Signale $X_S$ und $Y_S$ liegen als n-Bit Worte zur Übernahme durch einen externen Rechner oder eine Koordinaten-Anzeigevorrichtung vor. Die minimale Wortbreite n ist eine Funktion der örtlichen Auflösung: mit z.B. n = 8 kann eine örtliche Auflösung von 1:256 dargestellt werden.

Zur Ansteuerung der Matrix können Operationsverstärker geeigneter Ausgangsleistung benutzt werden (Spitzenwerte z. B. I = 3,6 mA bei U = 14 V). Die Generatoren sollten sinusförmige Spannungen abgeben, um Störungen der Elektrodensignale durch Einstreuung höherer Harmonischer infolge der Steuerkapazitäten zu vermeiden. Ferner wird für $f_y/f_x$ bewußt ein ungeradzahliges Verhältnis gewählt, damit nicht zufällig eine Harmonische von $f_x$ vom

Empfangsresonanzkreis $f_y$ bzw. umgekehrt als Nutzsignal interpretiert wird.

Für die Zusammenschaltung jeder Elektrode 1,2 oder 3 mit dem in Fig. 3 gezeigten Wandler 11 ergibt sich das in Fig. 8 dargestellte elektrische Ersatzschaltbild für den Eingang des Wandlers 11. Die Werte für $C_{xs}$, $C_{ys}$ variieren entsprechend der Elektrodenstellung zwischen den Werten $C$ $C_{xsmax}$ $C_{ysmax}$ und $C_{xsmin}$ bzw. $C_{ysmin}$.

Da die Eingangskapazität $C_E$ klein ist, wird, wie bereits erwähnt, die Eingangsschaltung direkt auf der Rückseite des die Sondenelektroden tragenden Substrates angeordnet.

Die Verbindungen von den Elektroden 1,2 und 3 zur Rückseite sind direkt durch das Substrat geführt. Eine Metallisierung der Rückseite, die auf Massepotential liegt, ist zur Abschirmung erforderlich. Die Eingangsschaltung jeder Elektrode wird durch einen Operationsverstärker mit hochohmigem Eingang realisiert, der als Verstärker und Impedanzwandler 11 beschaltet ist. Die verstärkten Signale (im Bereich 0-10V) werden über flexible Leitungen vom Signalaufnehmer 7 in die benachbarte Auswertelektronik 10 geführt, wie es in Fig. 1 dargestellt ist. Dort findet die Frequenzselektion und nach Gleichrichtung und Digitalisierung der Signale gemäß Fig. 3 deren Auswertung in Zählschaltungen statt. Für die Frequenzselektion und die weiteren Auswertungen werden bekannte Techniken verwendet.

Die Eingangsschaltung der Auswertelektronik besteht aus einem als Spannungs-Strom-Wandler (s. Fig. 3) beschalteten Operationsverstärker, stellt also eine durch Steilheit S und (hohe) Impedanz Z beschreibbare gesteuerte Stromquelle dar, die über die Transferfunktion

$$i(t) = S \cdot U_s(t)$$

einen das Signalgemisch enthaltenden Strom durch die Reihenschaltung zweier Parallelresonanzkreise treibt. Diese sind auf die beiden Frequenzen $f_x$ und $f_y$ abgeglichen.

Sekundärwicklungen auf beiden Resonanzkreisen koppeln die $f_x$-bzw. $f_y$-frequenten Signalteile aus. Nach Verstärkung, Gleichrichtung und Digitalisierung an einem Schwellwertglied werden die digitalen Signale jeder Elektrode Zählschaltungen zugeführt, die die Position des Signalaufnehmers 7 durch Auszählung der Maxima (s. Fig. 4, 5 und 6) bestimmen.

BATTELLE - INSTITUT E.V., Frankfurt/M.

===========================================================

Vorrichtung zur Steuerung zweidimensionaler Bewegungen

===========================================================

Patentansprüche

1. Vorrichtung zur Steuerung zweidimensionaler Bewegungen, dadurch gekennzeichnet, daß eine Matrix aus mehreren, sich kreuzenden und voneinander isolierten Leiterbahnen (5,6), die in x- und y-Richtung des Koordinatensystems verlaufen, vorgesehen ist, wobei die in x-Richtung verlaufenden Leiterbahnen (6) einer Wechselspannung liegen, deren Frequenz sich von der Wechselspannungsfrequenz der in y-Richtung verlaufenden Leiterbahnen (5) unterscheidet, und daß ein Signalaufnehmer (7) mit mindestens zwei, in einer der Matrix parallelen Ebene angeordneten Elektroden (1,2,3) über der Matrix beweglich angebracht ist, wobei die Bewegung des Signalaufnehmers (7) mit der zu steuernden Bewegung gekoppelt ist, und daß die durch die Elektroden (1,2, 3) während der Bewegung über der Matrix kapazitiv gewonnenen Signale zur Bestimmung der Richtung und des Weges der zu steuernden Bewegung auswertbar sind.

2. Vorrichtung nach Anspruch 1, dadurch gekennzeichnet, daß die Leiterbahnen (5,6) der Matrix in x- und y-Richtung eines rechtwinkligen Koordinatensystems verlaufen.

3. Vorrichtung nach Anspruch 1 oder 2, dadurch gekennzeichnet, daß in dem Signalaufnehmer(7) drei Elektroden (1,2,3) vorgesehen sind, von denen eine (1) zur Positionsbestimmung und zwei (2,3) zur Richtungsbestimmung dienen.

4. Vorrichtung nach Anspruch 3, dadurch gekennzeichnet, daß der Mittenabstand zwischen Elektroden (2,3) zur Richtungsbestimmung und der Elektrode (1) zur Positionsbestimmung gleich der halben Teilung oder einem ungeradzahligen Vielfachen der halben Teilung des Abstands (T) zwischen zwei parallelen Leiterbahnen ist.

5. Vorrichtung nach einem der Ansprüche 1 bis 4, dadurch gekennzeichnet, daß die Elektroden (1,2,3) kreisförmig oder quadratisch sind.

6. Vorrichtung nach Anspruch 5, dadurch gekennzeichnet, daß der Durchmesser oder die Kantenlänge der Elektroden (1,2,3) zumindest gleich einer Leiterbahnbreite und kleiner als der Mittenabstand zwischen zwei parallelen Leiterbahnen ist.

7. Vorrichtung nach einem der Ansprüche 1 bis 6, dadurch gekennzeichnet, daß die sich in Kreuzungspunkten der Matrix überdeckenden Flächen der Leiterbahnen (5,6) ca. 50 % der Fläche der einzelnen Elektroden (1,2 oder 3) betragen.

8. Vorrichtung nach Anspruch 7, dadurch gekennzeichnet, daß im Bereich der Kreuzungspunkte die Breite der Leiterbahnen (5,6) reduziert ist.

9. Vorrichtung nach einem der Ansprüche 1 bis 8, dadurch gekennzeichnet, daß die Matrix (4) und/oder der Signalaufnehmer(7) in Dickschichttechnik ausgeführt ist.

10. Vorrichtung nach einem der Ansprüche 1 bis 9, dadurch gekennzeichnet, daß für jede Elektrode (1,2,3) eine gesonderte Auswerteschaltung mit Impendanzwandler (11) vorgesehen ist.

11. Vorrichtung nach einem der Ansprüche 1 bis 10, dadurch gekennzeichnet, daß die Trennung von Signalen unterschiedlicher Frequenz in abgestimmten Resonanzkreisen (12,13) oder entsprechenden aktiven analogen oder digitalen Filtern erfolgt.

12. Vorrichtung nach einem der Ansprüche 1 bis 11, dadurch gekennzeichnet, daß die jeder Elektrode (1,2,3) zugeordneten Impendanzwandler (11) in den Signalaufnehmer (7), vorzugsweise in Dickschichttechnik integriert sind.

13. Vorrichtung nach einem der Ansprüche 1 bis 12, dadurch gekennzeichnet, daß in der Auswerteelektronik (10) für jede Elektrode (1,2,3) zwei Digitalisierschaltungen mit Gleichrichter (14,15) und Schwellen(16,17) sowie digitale Schaltungen zur Richtungserkennung der Bewegung und zur Positionsbestimmung vorgesehen sind.

- 4 -

0175906

14. Vorrichtung nach einem der Ansprüche 1 bis 13, dadurch gekennzeichnet, daß eine digitale Schnittstelle für die Position in x- und y-Richtung vorhanden ist, an die Einrichtungen zur Weiterverarbeitung anschließbar sind.

FIG. 1

a)

b)

FIG. 2

0175906

FIG. 3

Bewegung der Elektrode 1 in x- Richtung auf Leiterbahn x

Bewegung Elektrode 1 in y- Richtung auf Leiterbahn y

S = Digitalisierungsschwelle

FIG. 4

# Bewegung der Elektrode 1 in x-Richtung zwischen zwei x-Leiterbahnen

0175906

# Bewegung der Elektrode 1 diagonal

FIG. 5

Bewegung nach rechts

Bewegung nach links

Mittenversatz der Elektroden 1 u. 3 um eine halbe Teilung

FIG. 6

FIG. 7

FIG. 8